# EUROPÄISCHE PATENTSCHRIFT

(11) **EP 3 948 720 B1**
(45) Veröffentlichungstag und Bekanntmachung des Hinweises auf die Patenterteilung: **09.07.2025**
(21) Anmeldenummer: 20726321.1
(22) Anmeldetag: 08.05.2020
(51) Int. Cl.: G06Q 10/06, G06Q 10/00

(54) **SERVICESTATION ZUR IDENTIFIKATION EINER VERSCHMUTZUNG EINER FAHRZEUGKOMPONENTE UND VERFAHREN ZUM BETRIEB DER SERVICESTATION**
SERVICE STATION FOR IDENTIFYING THE DIRTINESS OF A VEHICLE COMPONENT, AND METHOD FOR OPERATING THE SERVICE STATION
STATION DE SERVICE POUR L'IDENTIFICATION DE SALISSURES D'UN COMPOSANT DE VÉHICULE ET PROCÉDÉ POUR FAIRE FONCTIONNER LA STATION DE SERVICE

(30) Priorität: 28.05.2019 DE 102019207862
(43) Veröffentlichungstag der Anmeldung: 09.02.2022
(73) Patentinhaber: VOLKSWAGEN AKTIENGESELLSCHAFT, 38440 Wolfsburg (DE)
(72) Erfinder: SCHÜTZ, Daniel, 38165 Lehre (DE); OTREMBA, Maik, 38118 Braunschweig (DE); HEROLD, Stephan, 38106 Braunschweig (DE); TORO RAMOS, Juan Mauricio, 38102 Braunschweig (DE); TOPPEL, Kristoph, 30173 Hannover (DE)
(86) Internationale Anmeldenummer: PCT/EP2020/062900
(87) Internationale Veröffentlichungsnummer: WO 2020/239398

(56) Entgegenhaltungen:
- DE-A1- 102014 112 123
- DE-A1- 102014 226 358
- US-A1- 2017 121 019

## Beschreibung

Die Erfindung betrifft eine Servicestation zum Identifizieren einer Verschmutzung einer Fahrzeugkomponente (Fahrzeugverschmutzungen), insbesondere zum Identifizieren von Verschmutzungen von Fahrzeugkomponenten zum Vorbereiten von deren automatischer Reinigung. Die Erfindung betrifft ferner ein Verfahren zum Betrieb der Servicestation, insbesondere zum Betrieb der Servicestation zum Erkennen von Verschmutzungen zumindest einer Fahrzeugkomponente und zur nachfolgenden Reinigung des Fahrzeugs.

Heutige Fahrzeuge verfügen bereits über eine Vielzahl von Assistenzsystemen, die den Fahrer in einer Vielzahl von Fahrsituationen computerbasiert unterstützen. Solche Assistenzsysteme können auf Sensoren zum Erfassen einer Vielzahl von Messdaten zurückgreifen, welche die Sinnesfähigkeiten des Menschen bei weitem übersteigen. Zudem übertrifft die Geschwindigkeit dieser Assistenzsysteme die menschliche Reaktionszeit signifikant. Bekannte Fahrerassistenzsysteme sind beispielsweise Spurhalteassistenten, Bremsassistenten bei Fußgängererkennung und Abstandsregeltempomaten, insbesondere für Stausituationen.

Durch Anwendung solcher Assistenzsysteme geht die Autonomie des Fahrers bezüglich seiner Fahrentscheidungen zunehmend auf das Fahrzeug beziehungsweise in diesem operierende Steuereinheiten über. Am Ende dieser Entwicklungen steht ein autonom fahrendes Fahrzeug, welches vollständig ohne Eingriffe eines Menschen manövrieren kann. Mittels eines solchen autonom fahrenden Fahrzeugs ist ein vollautomatisierter Personentransport möglich.

Bislang sind solche autonom fahrenden Fahrzeuge in der Regel auf Einzelpersonen zugelassen und/oder besitzen ohne zusätzliche Überwachung durch einen Fahrer keine Straßenzulassung. Hinsichtlich von Wartung und Pflege unterscheiden sich diese autonom fahrenden Fahrzeuge somit wenig von anderen in Privatbesitz befindlichen Fahrzeugen. In der Regel werden sich der oder die Eigentümer um die Instandhaltung und Energieversorgung des Fahrzeugs kümmern.

Bereits heutzutage existieren jedoch verschiedenste Mobilitätskonzepte, insbesondere in urbanen Ballungsräumen. Beim sogenannten Carsharing greift dabei eine Vielzahl von Nutzern unabhängig voneinander und zeitlich begrenzt auf die Fahrzeuge einer Fahrzeugflotte zu. Indem die Flottenfahrzeuge nur für den Zeitraum der tatsächlichen Nutzung an einen bestimmten Nutzer gebunden sind, kann ungenutzte Parkzeit der Fahrzeuge minimiert werden.

Carsharing-Konzepte sind auch für andere Fahrzeuge, wie beispielsweise Fahrräder, Roller oder Transporter, bekannt. Ohne auf Personenkraftwagen beschränkt zu sein, wird nachfolgend in stellvertretender Weise lediglich auf Carsharing Bezug genommen. Die Erfindung kann darüber hinaus auch im Rahmen von Ride-Pooling und Ride-Hailing zur Anwendung kommen.

Ferner kann eine autonome Fahrzeugflotte eine Flotte von Privatfahrzeugen bezeichnen, die zeitweise für Fahrdienstleistungen, insbesondere für autonome Fahrdienstleistungen, zur Verfügung gestellt werden. In den vorgenannten Fällen ist unter einem Flottenbetreiber der Anbieter einer Anwendung zu verstehen, wobei die Anwendung zum Verbinden von Nutzern und Anbietern von Fahrdienstleistungen genutzt wird. Unter Umständen kann es sich bei dem Flottenbetreiber um einen Fahrzeughersteller oder Servicepartner eines solchen handeln.

Man unterscheidet insbesondere zwischen zentralen und dezentralen Carsharing-Konzepten. Bei zentralen Carsharing-Konzepten muss die Fahrzeugnutzung stets an festen Stationen begonnen und beendet werden. Es handelt sich somit im Wesentlichen um eine kurzzeitige klassische Fahrzeugvermietung. Bei dezentralen Carsharing-Konzepten kann die Fahrzeugnutzung hingegen an beliebigen Punkten eines Betriebsbereichs des Flottenanbieters begonnen und beendet werden. Insbesondere dezentrale Carsharing-Konzepte haben das Potential, die Anzahl der insgesamt benötigten Fahrzeuge deutlich zu minimieren, da ab einer ausreichenden Anzahl von Nutzern und Fahrzeugen die Flottenfahrzeuge in selbstorganisierter Weise und mit einer ausreichenden Dichte im Betriebsbereich zur Verfügung stehen werden.

Insbesondere bei dezentralen Carsharing-Konzepten stellt jedoch die Energieversorgung, Wartung und Pflege der Fahrzeuge eine Herausforderung dar. Zum einen können zum Betanken und Reinigen der Flottenfahrzeuge Angestellte des Flottenanbieters genutzt werden. Dies erhöht jedoch die Personalkosten und somit die Kosten des Carsharing-Konzepts signifikant. Alternativ können die Nutzer der autonomen Fahrzeuge durch entsprechende Incentives dazu veranlasst werden, die jeweils notwendigen Servicefahrten durchzuführen.

Hierbei besteht jedoch das Risiko einer unzureichenden Reinigung oder von Ausfällen der Fahrzeuge. Über die Betriebsfähigkeit der Einzelfahrzeuge hinaus ist es ferner erforderlich, die Funktionalität der Flotte zu erhalten. Insbesondere die dezentralen Carsharing-Konzepte erfordern zu jeder Zeit eine bestimmte Mindestanzahl einsatzbereiter Fahrzeuge. Nur so kann eine ausreichende Verfügbarkeit von Fahrzeugen für die Nutzer sichergestellt werden. Die Einsatzfähigkeit betrifft dabei ebenfalls die Sauberkeit der Fahrzeuge außen wie innen, insbesondere im Hinblick auf die Kundenzufriedenheit. Jede Reinigung schränkt jedoch die Fahrzeugverfügbarkeit ein, weswegen unnötige Reinigungen ebenfalls zu vermeiden sind. DE 10 2014 112123 offenbart eine Waschvorrichtung für Fahrzeuge unter Einsatz von Robotern, DE 10 2014 226358 offenbart ein Verfahren zum Ermitteln von Oberflächenverschmutzungen von Fahrzeugen, US 2017/121019 offenbart eine dronenbasierte Fahrzeugwäsche.

Der Erfindung liegt daher die Aufgabe zugrunde, die Probleme des Standes der Technik zu überwinden oder zumindest zu verringern und eine Servicestation sowie ein Verfahren zum Identifizieren von Fahrzeugverschmutzungen bereitzustellen, welche die Vorbereitung einer automatischen Reinigung eines erfindungsgemäßen Flottenfahrzeugs ermöglichen.

Die Aufgabe wird gelöst durch die Gegenstände der unabhängigen Patentansprüche.

Bevorzugte Weiterbildungen sind Gegenstand der rückbezogenen Unteransprüche.

Ein erster Aspekt der vorliegenden Erfindung betrifft eine Servicestation für ein Fahrzeug, insbesondere eine zum autonomen Durchführen einer Serviceaktion für ein Fahrzeug, insbesondere für die Fahrzeuge einer autonomen Fahrzeugflotte, ausgebildete Servicestation. Die erfindungsgemäße Servicestation weist hierfür zumindest ein zum autonomen Identifizieren einer Verschmutzung zumindest einer Fahrzeugkomponente des Fahrzeugs ausgebildetes Servicemodul auf. Das Servicemodul ist dabei als Roboter ausgebildet oder weist Robotik auf.

Insbesondere weist das Servicemodul einen mobilen Roboter und/oder einen Roboterarm auf. Der mobile Roboter ist bevorzugt dazu ausgebildet, in das Fahrzeuginnere eingebracht zu werden, besonders bevorzugt durch eine geöffnete Tür oder ein geöffnetes Fenster des Fahrzeugs. Der bevorzugt mehrgelenkige Roboterarm ist bevorzugt durch eine geöffnete Tür oder ein geöffnetes Fenster des Fahrzeugs in den Fahrzeuginnenraum einführbar.

Gemäß der vorliegenden Erfindung ist an dem mobilen Roboter und/oder an dem Roboterarm zumindest ein Werkzeug zum Identifizieren von Verschmutzungen angeordnet. Das Werkzeug ist dabei bevorzugt mittels des mobilen Roboters oder mittels des Roboterarms in das Fahrzeuginnere einbringbar. Das Werkzeug weist zumindest einen optischen Sensor auf. Durch Einbringen des Werkzeugs in das Fahrzeuginnere ist somit vorteilhaft ein optisches Signal zumindest einer Fahrzeugkomponente erfassbar, wobei ein Verschmutzungsgrad der Komponente vorteilhaft anhand des erfassten optischen Signals bestimmbar ist.

Mit anderen Worten ist der zumindest eine optische Sensor des Werkzeugs der erfindungsgemäßen Servicestation zum Erfassen eines Verschmutzungsgrads der zumindest einen Fahrzeugkomponente des Fahrzeugs ausgebildet, insbesondere zum Erfassen von optischen Signalen, anhand derer ein Verschmutzungsgrad einer Fahrzeugkomponente ermittelt werden kann, beispielsweise durch eine Steuereinheit. Die erfindungsgemäße Servicestation erlaubt somit vorteilhaft das vollautomatische Erfassen von Verschmutzungen von Fahrzeugkomponenten, insbesondere eines Fahrzeuginnenraums.

In einer bevorzugten Ausführungsform der erfindungsgemäßen Servicestation ist der zumindest eine optische Sensor zur Aufnahme zumindest eines Bildsignals der zumindest einen Fahrzeugkomponente des Fahrzeugs ausgebildet. Gemäß dieser Ausführungsform handelt es sich bei dem optischen Sensor besonders bevorzugt um eine Kamera, um einen Laserscanner und/oder um einen Sensor zum Erfassen von Schwarzlicht und/oder UV-Strahlung. Mit anderen Worten ist der zumindest eine optische Sensor bevorzugt zum Detektieren von Signalen in einem vorbestimmten oder einstellbaren Wellenlängenbereich ausgebildet. Besonders bevorzugt ist der optische Sensor ein zum Aufnehmen von Fotos und/oder Videos, also Zeitreihen von Fotos, zumindest einer Fahrzeugkomponente ausgebildeter optischer Sensor.

Anhand solcher Fotos und/oder Videos von Fahrzeugkomponenten ist eine Verschmutzung von Fahrzeugkomponenten durch geeignete Software, beispielsweise unter Verwendung von Bildsegmentierung, Bilderkennung und/oder künstlicher Intelligenz, vorteilhaft zuverlässig ermittelbar. Besonders bevorzugt ist der zumindest eine optische Sensor zum Erfassen eines Bildsignals der Komponente unter verschiedenen Blickwinkeln ausgebildet. So ist eine Verschmutzung auch von dunklen, nicht-reflektierenden Fahrzeugkomponenten anhand der erfassten Bildsignale vorteilhaft mit hoher Zuverlässigkeit ermittelbar.

In einer ebenfalls bevorzugten Ausführungsform der erfindungsgemäßen Servicestation ist der zumindest eine optische Sensor des Werkezugs zum Detektieren eines Reflektionsgrades zumindest einer Oberfläche einer Fahrzeugkomponente ausgebildet. Verschmutzungen von reflektierenden Oberflächen gehen in der Regel mit einer Reduzierung des Reflektionsgrades der Oberfläche einher. Alternativ kann eine Reflektion einer ansonsten nicht-reflektierenden Oberfläche auf eine Verschmutzung der Oberfläche hindeuten. Somit kann durch Erfassen des Reflektionsgrades und dem Erkennen lokaler Schwankungen derselben auf eine lokale Verschmutzung einer Oberfläche geschlossen werden. Ebenso kann durch Vergleich des gemessenen Reflektionsgrades mit einem vordefinierten Wert eine globale Verschmutzung einer reflektierenden Oberfläche detektiert werden. Besonders bevorzugt ist der optische Sensor zum Erfassen eines Reflektionsgrades von Licht verschiedener Wellenlängen, beispielsweise nicht-sichtbarer Wellenlängen, ausgebildet. Somit sind vorteilhaft auch nicht oder nur schwer sichtbare Verschmutzungen, beispielsweise Fettflecke, Urinflecke oder dergleichen, anhand des Reflektionsgrades zuverlässig ermittelbar.

In einer besonders bevorzugten Ausführungsform der erfindungsgemäßen Servicestation weist das Werkzeug zum Identifizieren einer Verschmutzung zumindest einer Fahrzeugkomponente zumindest eine Leuchtquelle auf. Dabei handelt es sich bevorzugt um eine Leuchtelement zum Ausleuchten der Fahrzeugkomponenten in Vorbereitung der Aufnahme zumindest eines Bildsignals einer Fahrzeugkomponente. Ebenso bevorzugt ist die Leuchtquelle als Leuchtelement zum Durchführen des Erfassens zumindest eines Reflektionsgrads ausgebildet.

Die Leuchtquelle ist hierzu besonders bevorzugt zum Emittieren von Licht verschiedener Wellenlängen ausgebildet. Besonders bevorzugt ist die Leuchtquelle zum Emittieren von Schwarzlicht oder UV-Licht ausgebildet, um Verschmutzungen, insbesondere organische Verschmutzungen, besser sichtbar zu machen. Ebenso bevorzugt ist der zumindest eine optische Sensor mit zumindest einem Filter versehen, der das selektive Detektieren von Signalen in bestimmten Wellenlängenbereichen ermöglicht, beispielsweise um als Band- oder Hochpassfilter nur bestimmte UV-Strahlung zu detektieren. Die spektralen Eigenschaften des zumindest einen Filters sind dabei bevorzugt an die spektralen Eigenschaften der zumindest einen Leuchtquelle angepasst. Somit können Bildsignale in verschiedenen Wellenlängenbereichen durch den Einsatz einer entsprechend konfigurierten Leuchtquelle und/oder eines entsprechend konfigurierten zumindest einen Filters erfasst werden.

Bevorzugt handelt es sich beim Erfassen von Bildsignalen um eine qualitative Erfassung des von einer Fahrzeugkomponente reflektierten Lichts, insbesondere der orts- und/oder frequenzaufgelösten Erfassung der Intensität des reflektierten Lichts. Bei der Bestimmung des Reflektionsgrads handelt es sich bevorzugt um eine quantitative Bestimmung des von einer Fahrzeugkomponente reflektierten Lichts, beispielsweise um eine nicht ortsaufgelöste Erfassung der Intensität des reflektierten Lichts. Besonders vorteilhaft wird das Emittieren von Licht spezieller Wellenlängenbereiche mittels der zumindest einen Leuchtquelle synergistisch zur anschließenden Reinigung, beispielsweise zur Desinfektion von Oberflächen eingesetzt.

In einer ebenfalls bevorzugten Ausführungsform weist das Werkzeug zum Identifizieren von Verschmutzungen zumindest einer Fahrzeugkomponente zumindest einen Dampfemitter auf. Der Dampfemitter ist dabei zur Abgabe von Wasserdampf ausgebildet und weist beispielsweise einen Wassertank oder eine Wasserzuleitung, ein Heizelement und eine Düse auf. Alternativ weist der Dampfemitter eine Dampfzuleitung und eine Düse oder dergleichen auf. Durch das Bedampfen von Oberflächen können Verschmutzungen der Oberfläche, insbesondere fetthaltige Verschmutzungen, vorteilhaft gut sichtbar gemacht werden. Das Bedampfen von Oberflächen erfolgt daher bevorzugt vor dem Erfassen eines optischen Signals mit dem zumindest einen optischen Sensor. Besonders vorteilhaft wird der Dampfemitter beziehungsweise der abgegebene Dampf synergistisch zur Reinigung von Oberflächen, beispielsweise von Polsteroberflächen oder dergleichen, eingesetzt.

In einer ebenfalls bevorzugten Ausführungsform des Werkzeugs der erfindungsgemäßen Servicestation weist das Werkzeug zumindest einen Feuchtigkeitssensor auf. Ebenfalls bevorzugt weist das Werkzeug zumindest einen Luftgütesensor auf. Der Feuchtigkeitssensor ist bevorzugt zum Erfassen eines Feuchtegehalts von Fahrzeugkomponenten, beispielsweise Polstern oder Bodenbelägen, oder eines Feuchtegehalts der Luft im Fahrzeuginneren ausgebildet. Mittels des zumindest einen Feuchtigkeitssensors ist somit bevorzugt vorteilhaft erfassbar, ob eine Trocknung von Elementen des Fahrzeuginnenraums notwendig ist. Der Luftgütesensor ist bevorzugt dazu ausgebildet, einen Staub-, Feinstaub-, Partikel- und/oder Pollengehalt der Luft im Fahrzeuginnenraum zu erfassen. Somit kann beispielsweise ermittelt werden, ob eine anti-allergene Reinigung des Fahrzeuginneren notwendig ist. Durch Einbringen der vorgenannten Sensoren in das Fahrzeuginnere können somit eine Vielzahl von Informationen zu einem Verschmutzungsgrad des Fahrzeuginnenraums erfasst werden.

In einer bevorzugten Ausführungsform des Werkzeugs der erfindungsgemäßen Servicestation ist an dem mobilen Roboter und/oder an dem Roboterarm ein Reinigungswerkzeug zum Durchführen einer Innenraumreinigung zumindest einer Fahrzeugkomponente angeordnet. Bei dem zumindest einen Reinigungswerkzeug handelt es sich bevorzugt um eine Staubsaugerdüse, einer Polsterbürste und/oder einen Applikator zum Auftrag von Reinigungsmittel. Diese Werkzeuge sind dabei in bekannter Weise ausgeführt und das Anbringen derartiger Reinigungswerkzeuge an einem mobilen Roboter oder einem Roboterarm und das Ansteuern derselben für eine autonome Reinigung sind dem Fachmann bekannt.

In einer bevorzugten Ausführungsform der erfindungsgemäßen Servicestation ist diese dazu ausgebildet, in einer Serviceinfrastruktur für autonome Flottenfahrzeuge zum Einsatz zu kommen. Besonders bevorzugt weist die erfindungsgemäße Servicestation hierzu ein für die Kommunikation mit den Fahrzeugen und/oder einem Server eines Flottenbetreibers eingerichtetes (zweites) Kommunikationsmodul auf. Das (zweite) Kommunikationsmodul ist beispielsweise ein WLAN- oder Mobilfunk-Modul und ist vorzugsweise zum Durchführen einer Car2Car oder Car2X Kommunikation ausgebildet. Das zweite Kommunikationsmodul ist bevorzugt dafür ausgebildet, entsprechend eines von dem ersten Kommunikationsmodul und/oder von dem Server genutzten Kommunikationsprotokolls zu kommunizieren.

Das Kommunikationsmodul der erfindungsgemäßen Servicestation ist bevorzugt dazu ausgebildet, eine erste Nachricht zum Identifizieren einer Verschmutzung zumindest einer Fahrzeugkomponente an ein Fahrzeug zu übermitteln. Mit anderen Worten ist das Kommunikationsmodul dazu ausgebildet, insbesondere unter der Kontrolle der Steuereinheit, ein Flottenfahrzeug so anzusteuern, dass dieses die Identifikation einer Verschmutzung durchführt und/oder unterstützt. Das Unterstützen betrifft dabei insbesondere das Anweisen von Fahrzeugeinstellungen, die das Erfassen von einen Verschmutzungsgrad charakterisierenden optischen Signalen mittels des zumindest einen optischen Sensors vereinfacht. Sofern das Fahrzeug angewiesen wird, das Identifizieren eines Verschmutzungsgrads, zumindest teilweise selbst durchzuführen, beispielsweise durch Verwendung zumindest einer im Fahrzeug angeordneten Kamera, ist das Kommunikationsmodul ferner bevorzugt dazu eingerichtet, eine zweite Nachricht mit, besonders bevorzugt vom Fahrzeug selbst erfasster, Informationen zu einem Verschmutzungsgrad zumindest einer Fahrzeugkomponente zu empfangen.

Die erfindungsgemäße Servicestation weist ferner bevorzugt eine zum Ermitteln einer an einem Fahrzeug durchzuführenden Serviceaktion eingerichtete (zweite) Steuereinheit auf. Die (zweite) Steuereinheit ist insbesondere dazu ausgebildet, die Serviceaktion anhand von Informationen zu einem Servicebedarf, insbesondere einem Verschmutzungsgrad zumindest einer Fahrzeugkomponente, des Fahrzeugs zu ermitteln. Ferner bevorzugt ist die Steuereinheit dazu ausgebildet, das Werkzeug zum Identifizieren einer Fahrzeugverschmutzung, insbesondere den zumindest einen optischen Sensor, die zumindest eine Leuchtquelle und/oder den zumindest einen Dampfemitter davon, anzusteuern. Ferner bevorzugt ist die Steuereinheit dazu ausgebildet, die mit dem zumindest einen optischen Sensor erfassten optischen Signale auszuwerten und zumindest eine Verschmutzung einer Fahrzeugkomponente anhand des zumindest einen optischen Signals zu ermitteln. Mit anderen Worten, ist die Steuereinheit zum Identifizieren einer Fahrzeugverschmutzung zumindest einer Fahrzeugkomponente ausgebildet.

Hierzu ist die Steuereinheit insbesondere dazu ausgebildet, den mobilen Roboter und/oder Roboterarm zu steuern, insbesondere die Bewegungen des mobilen Roboters und/oder Roboterarms zu steuern. Die (zweite) Steuereinheit ist insbesondere dazu ausgebildet, den mobilen Roboter und/oder Roboterarm so zu steuern, dass diese in das Fahrzeug eingeführt/eingebracht beziehungsweise herausgeführt/herausgefahren werden. Besonders bevorzugt ist die (zweite) Steuereinheit dazu ausgebildet, den mobilen Roboter und/oder Roboterarm durch eine geöffnete Tür oder ein geöffnetes Fenster des Fahrzeugs in den Fahrzeuginnenraum einzuführen.

In einer ebenfalls bevorzugten Ausführungsform ist die (zweite) Steuereinheit der erfindungsgemäßen Servicestation dafür eingerichtet, eine an zumindest einer Fahrzeugkomponente des Fahrzeugs durchzuführende Reinigung anhand des identifizierten Verschmutzungsgrads zu ermitteln. Dabei wird insbesondere die zu reinigende Fahrzeugkomponente und die Art der Reinigung ermittelt. Gegebenenfalls werden weitere Randbedingungen, beispielsweise zum Obermaterial der jeweiligen Fahrzeugkomponente und der diesbezüglich zulässigen Reinigungsmittel und -methoden ermittelt. Ferner bevorzugt ist die zweite Steuereinheit auch dafür eingerichtet, die an der Komponente durchzuführende Reinigung auch anhand von Informationen zu ermitteln, die mittels des (zweiten) Kommunikationsmoduls der Servicestation von dem Fahrzeug empfangen wurden.

Ferner bevorzugt ist die erfindungsgemäße Servicestation, insbesondere die Steuereinheit, beispielsweise unter Verwendung des Kommunikationsmoduls oder des Werkzeugs, zusätzlich zum Erfassen einer Vielzahl von fahrzeugspezifischen Informationen ausgebildet. Die Steuereinheit ist besonders bevorzugt dazu ausgebildet, einen Fahrzeugtyp, eine Fahrzeuggröße, die im Fahrzeug vorhandenen Fahrzeugkomponenten und deren Eigenschaften, Einstellwerte von verstellbaren Fahrzeugkomponenten (Fahrzeugsitze, Rückspiegel, etc.) und dergleichen zu erfassen. Die zweite Steuereinheit ist bevorzugt dazu ausgebildet, die Reinigung anhand der zusätzlich erfassten fahrzeugspezifischen Informationen anzupassen. Darüber weist die erfindungsgemäße Servicestation bevorzugt weitere Mittel zum Feststellen eines weitergehenden Servicebedarfs auf, wie beispielsweise Mittel zum Auslesen eines Füllstands eines Energiespeichers des Kraftfahrzeugs und/oder Mittel zum Auslesen einer Fehlermeldung des Kraftfahrzeugs.

In einer ebenfalls bevorzugten Ausführungsform der erfindungsgemäßen Servicestation weist diese ferner ein dem Servicemodul nachgelagertes Kontrollmodul auf. Das Kontrollmodul weist dabei ebenfalls ein Werkzeug zum Identifizieren einer Verschmutzung zumindest einer Fahrzeugkomponente auf, wie vorstehend bereits mit Bezug zur Servicestation beschrieben. Mit anderen Worten ist das Kontrollmodul ebenfalls dazu ausgebildet, einen Verschmutzungsgrad zumindest einer Fahrzeugkomponente zu detektieren. Diese Detektion dient jedoch insbesondere dazu, die Qualität der zuvor durchgeführten Reinigung zu evaluieren. Insbesondere kann der mit dem Kontrollmodul erfasste Ist-Zustand mit einem mit der Reinigung angestrebten Soll-Zustand verglichen werden.

Ein weiterer Aspekt der vorliegenden Erfindung betrifft ein Verfahren zum Identifizieren der Verschmutzung zumindest einer Fahrzeugkomponente, das von einer erfindungsgemäßen Servicestation, wie vorstehend beschrieben, durchgeführt wird. Bevorzugt handelt es sich um ein Verfahren zum Identifizieren der Verschmutzung zumindest einer Fahrzeugkomponente eines in einem Betriebsbereich operierenden autonomen Fahrzeugs. Mit anderen Worten können die Fahrzeuge innerhalb des Betriebsbereichs von Nutzern für autonome Fahrdienstleistungen genutzt werden, unabhängig davon, ob es sich um Fahrzeuge eines Carsharing-Anbieters oder um private Fahrzeuge handelt. Zumindest in dem Betriebsbereich ist somit die für einen autonomen Fahrbetrieb der Fahrzeuge notwendige Infrastruktur vorhanden.

Der Betriebsbereich weist besonders bevorzugt zumindest eine zum Identifizieren der Verschmutzung zumindest einer Fahrzeugkomponente des Fahrzeugs ausgestattete Servicestation auf. Ferner ist zumindest ein Server zur Kommunikation mit dem zumindest einen autonomen Fahrzeug und der zumindest einen Servicestation eingerichtet. Das erfindungsgemäße Verfahren wird bevorzugt in einem derartigen Betriebsbereich realisiert.

In einem ersten Schritt des erfindungsgemäßen Verfahrens erfolgt das Einsetzen des mobilen Roboters in das Fahrzeug und/oder das Einfahren des Roboterarms in das Fahrzeug. Diese Schritte erfolgen offensichtlich nach der Ankunft des Fahrzeugs an der Servicestation sowie unter der Kontrolle der Steuereinheit. Bevorzugt umfasst der Schritt ferner das Anweisen des Fahrzeugs, mittels des Kommunikationsmoduls, zum Öffnen zumindest einer Fahrzeugscheibe und/oder zumindest einer Fahrzeugtür. Ebenfalls bevorzugt wird die Fahrzeugtür von dem Roboterarm selbst geöffnet. Der mobile Roboter wird bevorzugt ebenfalls mit einem Roboterarm in das Fahrzeug eingesetzt. Alternativ ist der mobile Roboter dazu ausgebildet, selbststätig in das geöffnete Fahrzeug einzufahren, und wird dafür gegebenenfalls, unter der Steuerung der Steuereinheit, mittels einer Hebevorrichtung angehoben.

In einem nächsten Schritt des erfindungsgemäßen Verfahrens wird ein Verschmutzungsgrad zumindest einer Fahrzeugkomponente des Fahrzeugs mittels des zumindest eines optischen Sensors des Werkzeugs erfasst. Insbesondere wird zumindest ein optisches Signal der zumindest einen Fahrzeugkomponente mittels des zumindest einen optischen Sensors erfasst. Das zumindest eine optische Signal ist dabei bevorzugt ein Bildsignal oder ein Reflektionsgrad zumindest einer Fahrzeugkomponente. Dieses zumindest eine erfasste optische Signal wird anschließend mit der Steuereinheit der erfindungsgemäßen Servicestation ausgewertet. Anhand des ausgewerteten Signals kann der Verschmutzungsgrad endgültig ermittelt werden. Das erfindungsgemäße Verfahren ermöglicht somit vorteilhaft das vollautomatische Ermitteln eines Verschmutzungsgrads zumindest einer Fahrzeugkomponente, beispielsweise von einem autonomen Flottenfahrzeug, das turnusmäßig eine erfindungsgemäße Servicestation aufsucht.

In einer bevorzugten Durchführungsform des erfindungsgemäßen Verfahrens erfolgt ferner ein Übermitteln einer ersten Nachricht zum Identifizieren einer Verschmutzung zumindest einer Fahrzeugkomponente an ein Fahrzeug. Mit anderen Worten wird ein Flottenfahrzeug mittels der ersten Nachricht so angesteuert, dass dieses die Identifikation einer Verschmutzung durchführt und/oder unterstützt. Das Unterstützen betrifft dabei insbesondere das Anweisen von Fahrzeugeinstellungen, die das Erfassen von einen Verschmutzungsgrad charakterisierenden optischen Signalen mittels des zumindest einen optischen Sensors vereinfacht, wie beispielsweise das Darstellen eines komplett weißen Hintergrunds mittels eines Displays, das Anschalten fahrzeuginterner Beleuchtung, das Abgeben von Dampf, etc. Sofern das Fahrzeug angewiesen wird, das Identifizieren eines Verschmutzungsgrads, zumindest teilweise selbst durchzuführen, beispielsweise durch Verwendung zumindest einer im Fahrzeug angeordneten Kamera, ist das Kommunikationsmodul ferner bevorzugt dazu eingerichtet, eine zweite Nachricht mit, besonders bevorzugt vom Fahrzeug selbst erfasster, Informationen zu einem Verschmutzungsgrad zumindest einer Fahrzeugkomponente zu empfangen.

In einer bevorzugten Durchführungsform des erfindungsgemäßen Verfahrens erfolgt ferner das Ermitteln einer an dem Fahrzeug durchzuführenden Reinigung anhand des erfassten Verschmutzungsgrads der zumindest einen Fahrzeugkomponente. Der erfasste Verschmutzungsgrad stellt dabei eine Zustandseigenschaft eines Fahrzeugs dar, die angibt, dass ein Ist-Zustand der Verschmutzung des Fahrzeugs von einem Soll-Zustand desselben abweicht. Dabei kann der Soll-Zustand für alle Fahrzeuge gelten oder individuell für ein bestimmtes Fahrzeug, beispielsweise von einem Nutzer oder Inhaber des Fahrzeugs, festgelegt sein. Die ermittelte Reinigung ist dann in allgemeinster Form eine Einwirkung auf das Fahrzeug, um dieses von dem vorliegenden Ist-Zustand der Verschmutzung in einen gewünschten Soll-Zustand zu überführen. Besonders bevorzugt wird eine Art der Reinigung dabei anhand der Art des ermittelten Verschmutzungsgrads ermittelt. Ferner bevorzugt wird ein Grad der Reinigung anhand des Grades des ermittelten Verschmutzungsgrads ermittelt. Beispielsweise wird anhand des Verschmutzungsgrads ermittelt, welche Fahrzeugkomponente zu reinigen ist und beispielsweise ob eine Trocken- oder Nassreinigung der Fahrzeugkomponente erfolgen soll.

In einem nächsten Schritt des erfindungsgemäßen Verfahrens wird in der Servicestation die ermittelte Reinigung teil- oder vollautonom durchgeführt. Die Reinigung erfolgt dabei insbesondere bevorzugt mit dem zumindest einen Reinigungswerkzeug der Servicestation. So wird eine Staubsaugerdüse zum Beispiel zum Absaugen einer Fahrzeugkomponente genutzt und ein Mittel zum Auftragen eines Reinigungsmittels für eine Displayreinigung genutzt. Im Vorfeld der eigentlichen Reinigung erfolgt im erfindungsgemäßen Verfahren vorteilhaft das Ermitteln zumindest eines zum Durchführen der ermittelten Reinigung verfügbaren Servicemoduls der Servicestation. Dabei ist ein Servicemodul eine funktionelle Baugruppe der Servicestation, die zum Durchführen einer Reinigung zumindest einer Fahrzeugkomponente ausgebildet ist. Bevorzugt weist die Servicestation eine Mehrzahl solcher Servicemodule auf. Das verfügbare Servicemodul wird bevorzugt anhand der durchzuführenden Reinigung und anhand von Informationen zur Belegung oder Auslastung der Servicemodule, die in der Servicestation vorliegen, ausgewählt. Die ermittelte Reinigung wird dann bevorzugt mittels des ermittelten Servicemoduls und besonderes bevorzugt vollautomatisch durchgeführt.

In einer ferner bevorzugten Durchführungsform des erfindungsgemäßem Verfahrens erfolgt ferner ein Erfassen eines Reinigungsgrads der zumindest einen Fahrzeugkomponente. Bevorzugt erfolgt dieses Erfassen mittels eines Kontrollmoduls, das bevorzugt ebenfalls ein Werkzeug mit zumindest einem optischen Sensor aufweist, wie die erfindungsgemäße Servicestation. Ferner bevorzugt erfolgt das Erfassen des Reinigungsgrads der zumindest einen Fahrzeugkomponente mittels zumindest eines optischen Sensors des Werkzeugs der erfindungsgemäßen Servicestation, insbesondere wie vorstehend beschrieben.

In einer besonders bevorzugten Durchführungsform des erfindungsgemäßen Verfahrens erfolgt ferner ein Vergleich des erfassten Reinigungsgrads mit dem erfassten Verschmutzungsgrad oder mit einer zu der durchgeführten Reinigung vorbestimmten Zielvorgabe. Mit anderen Worten wird der Verschmutzungsgrad nach der Reinigung mit dem Verschmutzungsgrad vor der Reinigung oder mit einem angestrebten Ergebnis der Reinigung verglichen. Anhand dieses Vergleichs wird bevorzugt ein Effektivitätsmaß der durchgeführten Reinigung ermittelt, beispielsweise als Verhältnis des Verschmutzungsgrads gemäß des Reinigungsgrads und des vor der Reinigung erfassten Verschmutzungsgrads. Anhand des bestimmten Effektivitätsmaßes ist die Qualität der durchgeführten Reinigung vorteilhaft quantisierbar.

Besonders bevorzugt wird das Effektivitätsmaß mit einem vorbestimmten Grenzwert, sprich einem vorbestimmten Grenzwert für das Effektivitätsmaß, verglichen. Ist das Effektivitätsmaß gleich oder größer als der vorbestimmte Grenzwert, ist die autonome Reinigung des Fahrzeugs erfolgreich abgeschlossen. Ist das Effektivitätsmaß jedoch geringer als der vorbestimmte Grenzwert, erfolgt ein erneutes Durchführen der Reinigung mittels des ersten Servicemoduls und/oder des zweiten Servicemoduls. Alternativ oder zusätzlich erfolgt die Ausgabe einer Fehlermeldung, beispielsweise wenn nach der erneuten Durchführen der Reinigung, zweite Informationen erfasst wurden, die zu einem zu geringen Effektivitätsmaß korrespondieren.

Die Verfahrensschritte des erfindungsgemäßen Verfahrens können durch elektrische oder elektronische Bauteile oder Komponenten (Hardware), durch Firmware (ASIC) implementiert sein oder durch Ausführen eines geeigneten Programms (Software) verwirklicht werden. Ebenfalls bevorzugt wird das erfindungsgemäße Verfahren durch eine Kombination von Hardware, Firmware und/oder Software verwirklicht, beziehungsweise implementiert. Beispielsweise sind einzelne Komponenten zum Durchführen einzelner Verfahrensschritte als separat integrierter Schaltkreis ausgebildet oder auf einem gemeinsamen integrierten Schaltkreis angeordnet. Einzelne zum Durchführen einzelner Verfahrensschritte eingerichtete Komponenten sind ferner bevorzugt auf einem (flexiblen) gedruckten Schaltungsträger (FPCB/PCB), einem Tape Carrier Package (TCP) oder einem anderen Substrat angeordnet.

Die einzelnen Verfahrensschritte des erfindungsgemäßen Verfahrens sind ferner bevorzugt als ein oder mehrere Prozesse ausgebildet, die auf einem oder mehreren Prozessoren in einem oder mehreren elektronischen Rechengeräten laufen und beim Ausführen von einem oder mehreren Computerprogrammen erzeugt werden. Die Rechengeräte sind dabei bevorzugt dazu ausgebildet, mit anderen Komponenten, beispielsweise einem Kommunikationsmodul sowie einem oder mehreren Sensoren beziehungsweise Kameras, zusammenzuarbeiten, um die hierin beschriebenen Funktionalitäten zu verwirklichen. Die Anweisungen der Computerprogramme sind dabei bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf einer Vielzahl von Geräten verteilt vorliegen kann, um die Schritte des erfindungsgemäßen Verfahrens auszuführen, ohne von dem zuvor beschriebenen erfindungsgemäßen Verfahren abzuweichen.

Das erfindungsgemäße Verfahren erfolgt bevorzugt in einem System zum Durchführen einer Serviceaktion an einem Fahrzeug. Das System zum Durchführen einer Serviceaktion weist zumindest ein autonom fahrendes Fahrzeug auf, welches zumindest einen zum Erfassen von Umgebungsdaten ausgebildeten ersten Sensor und zumindest einen zum Erfassen von Fahrzeugdaten ausgebildeten zweiten Sensor aufweist. Der zumindest eine erste Sensor erlaubt dabei ein Erfassen von Umgebungs- beziehungsweise Umweltinformationen und der zumindest eine zweite Sensor erlaubt ein Erfassen von fahrzeugeigenen Informationen. Das Fahrzeug weist ferner ein zum Durchführen autonomer Fahrmanöver ausgebildetes Fahrsystem auf, das bevorzugt zur vollständigen Quer- und Längsführung des Fahrzeugs ausgebildet ist.

Ferner weist das Fahrzeug ein zum Herstellen zumindest einer Kommunikationsverbindung eingerichtetes (erstes) Kommunikationsmodul auf. Das Kommunikationsmodul ist bevorzugt ein WLAN- oder Mobilfunk-Modul und ist vorzugsweise zum Durchführen einer Car2Car oder Car2X Kommunikation ausgebildet. Ferner weist das Fahrzeug einen Energiespeicher, beispielsweise ein Batteriesystem, und/oder einen Kraftstoff- oder Wasserstofftank auf. Das Fahrzeug weist ferner eine Steuereinheit zum Durchführen von Verfahrensschritten auf.

Das System weist ferner zumindest eine erfindungsgemäße Servicestation wie vorstehend beschrieben auf. Das System weist ferner eine Mehrzahl zum autonomen Durchführen einer Serviceaktion, insbesondere einer Reinigung einer Fahrzeugkomponente des Fahrzeugs ausgebildeter Servicemodule auf. Die Servicemodule sind dabei in der Servicestation angeordnet, beispielsweise in verschiedenen Bereichen eines Gebäudes, oder sind mit der Servicestation assoziiert, beispielsweise in verschiedenen Abschnitten eines Geländes. Jedes Servicemodul weist dabei ein drittes Kommunikationsmodul auf. Das dritte Kommunikationsmodul ist bevorzugt ein WLAN- oder Mobilfunk-Modul und ist vorzugsweise zum Durchführen einer Car2Car oder Car2X Kommunikation ausgebildet. Bevorzugt weist jedes Servicemodul eine dritte Steuereinheit auf, die zum Durchführen der Verfahrensschritte des Servicemoduls im erfindungsgemäßen Verfahren ausgebildet ist. Ferner weist jedes Servicemodul ein oder mehrere Mittel zum Durchführen einer Reinigung auf.

Besonders bevorzugt weist das zumindest eine Servicemodul zumindest ein zum Durchführen einer Reinigung zumindest einer Fahrzeugkomponente des Fahrzeugs ausgebildetes erstes Servicemodul auf. Das erste Servicemodul weist bevorzugt einen mobilen Roboter und/oder einen Roboterarm auf, an dem ein Werkzeug zur Identifizierung eines Verschmutzungsgrads zumindest einer Fahrzeugkomponente angeordnet ist. Bevorzugt trägt der mobile Roboter oder Roboterarm darüber hinaus zur Innenraumreinigung des Fahrzeugs geeignete und ausgebildete weitere Werkzeuge. Der Roboterarm ist bevorzugt dazu ausgebildet, durch eine geöffnete Tür oder ein geöffnetes Fenster des Fahrzeugs in den Fahrzeuginnenraum eingeführt zu werden. Der mobile Roboter ist bevorzugt dazu ausgebildet, durch eine geöffnete Tür oder ein geöffnetes Fenster des Fahrzeugs in den Fahrzeuginnenraum eingebracht zu werden. Bei den weiteren Werkzeugen handelt es sich beispielsweise um eine Staubsaugerdüse, eine Polsterbürste, einen Applikator zum Auftrag von Reinigungsmittel und/oder dergleichen.

Ebenfalls bevorzugt weist das zumindest eine Servicemodul zumindest ein zum Durchführen einer Außenreinigung des Fahrzeugs ausgebildetes zweites Servicemodul auf. Das zweite Servicemodul ist bevorzugt wie eine aus dem Stand der Technik bekannte automatische Waschstraße ausgebildet und weist bevorzugt Düsen zum Auftrag von zumindest einer Reinigungsflüssigkeit, Bürsten oder Lappen zum Abtrag von Schmutz von dem Fahrzeug und/oder einen Fön zum Trocknen des Fahrzeugs auf. Besonders bevorzugt weist das zweite Servicemodul darüber hinaus weitere Waschelemente, wie beispielsweise speziell zur Felgenwäsche ausgebildete Bürsten und/oder Mittel zum Wachsauftrag, auf. Ebenfalls bevorzugt weist das zweite Servicemodul Mittel zum Transport des Fahrzeugs im Modul auf.

Ebenfalls bevorzugt weist die Servicestation alternativ oder zusätzlich zumindest ein zum Befüllen des Energiespeichers des Fahrzeugs ausgebildetes drittes Servicemodul auf. Das dritte Servicemodul weist dabei insbesondere einen eigenen Energiespeicher, beispielsweise eine Batterie oder einen Kraftstofftank, oder einen Anschluss an ein entsprechendes Versorgungsnetz, beispielsweise an ein Stromnetz oder an eine Kraftstoffzuleitung, auf. Ferner weist das dritte Servicemodul ein Anschlussmodul zum Anschluss an ein Nachfüllelement des Fahrzeugs auf. Das Nachfüllelement des Fahrzeugs ist dabei beispielsweise ein Tankstutzen oder eine Ladebuchse. Ferner weist das Anschlussmodul bevorzugt einen Roboterarm auf, der ein an das Nachfüllelement des Fahrzeugs angepasstes Befüllelement aufweist. Das Befüllelement ist vorteilhaft über eine Zuleitung mit dem Energiespeicher verbunden. Besonders bevorzugt ist das dritte Servicemodul für Hybridfahrzeuge ausgebildet und weist beispielsweise ein mit dem Stromnetz verbundenes erstes Befüllelement zum Anschluss an eine Ladebuchse des Fahrzeugs und ein mit einer Kraftstoffzuleitung verbundenes zweites Befüllelement zum Anschluss an einen Tankstutzen des Fahrzeugs auf.

Ferner bevorzugt weist die Servicestation des Systems zum Durchführen einer Serviceaktion ein zum Wechseln der Reifen des Fahrzeugs ausgebildetes viertes Servicemodul auf. Das vierte Servicemodul weist dabei ein Lager für eine Vielzahl von Ersatzrädern und ein automatisches Regalsystem oder dergleichen zur automatischen Entnahme eines Satzes von Ersatzrädern aus dem Lager auf. Ferner bevorzugt weist das vierte Servicemodul einen Roboterarm zum automatischen Wechseln der Reifen des Fahrzeugs mit den Ersatzrädern auf.

Das System weist ferner bevorzugt zumindest einen, zur Kommunikation mit dem zumindest einen autonomen Fahrzeug und zumindest einer Servicestation eingerichteten Server auf. Bei dem Server handelt es sich bevorzugt um einen Server eines Rechenzentrums eines Anbieters von Carsharing-Dienstleistungen (Flottenbetreiber), eines Anbieters von Reinigungsdiensten oder eines Fahrzeugherstellers. Der Server weist insbesondere ein (viertes) Kommunikationsmodul auf, das als WLAN- oder Mobilfunk-Modul und vorzugsweise zum Durchführen einer Car2Car oder Car2X Kommunikation ausgebildet ist. Der Server ist ferner zum Vermitteln einer Kommunikation zwischen dem Fahrzeug und der Servicestation ausgebildet. Mit anderen Worten ist der Server dazu ausgebildet, von der Servicestation oder dem Fahrzeug empfangene Daten an das Fahrzeug oder die Servicestation weiterzuleiten.

Ebenfalls bevorzugt ist der Server dazu ausgebildet, eine Auslastung einer autonomen Fahrzeugflotte zu ermitteln. Hierbei ist das mit Bezug zum erfindungsgemäßen Verfahren beschriebene Fahrzeug ein Teil der autonomen Fahrzeugflotte. Der Server ist zur Kommunikation mit den autonomen Fahrzeugen eingerichtet. Gemäß einer bevorzugten Durchführungsform erfolgt eine Bestimmung einer Auslastung der autonomen Fahrzeugflotte durch den Server und basierend auf von den Fahrzeugen generierten Auslastungsdaten. Die Auslastungsdaten können dabei die Anzahl von Nutzeranfragen, durchschnittliche Fahrzeiten und Fahrtlängen berücksichtigen. Ebenso können zusätzliche Informationen berücksichtigt werden, die eine hohe Nachfrage wahrscheinlich machen, wie Beginn und Ende eines Großereignisses, wie beispielsweise ein Sportereignis, ein Konzert, etc.

Weitere bevorzugte Ausgestaltungen der Erfindung ergeben sich aus den übrigen, in den Unteransprüchen genannten Merkmalen. Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung einer Servicestation gemäß einer Ausführungsform;
- Figur 2: eine schematische Darstellung eines Roboterarms der Servicestation gemäß einer Ausführungsform;
- Figur 3: eine schematische Darstellung eines Werkzeugs zum Identifizieren zumindest einer Fahrzeugverschmutzung gemäß einer Ausführungsform;
- Figur 4: eine schematische Darstellung eines Fahrzeuginnenraums mit Mitteln zum Identifizieren zumindest einer Fahrzeugverschmutzung;
- Figur 5: eine schematische Darstellung eines Systems zur Durchführung der erfindungsgemäßen Verfahren, aufweisend ein autonomes Fahrzeug, eine Servicestationen mit Servicemodul und einen Server; und
- Figur 6: eine schematische Darstellung eines Betriebsbereichs zur Durchführung des erfindungsgemäßen Verfahrens.

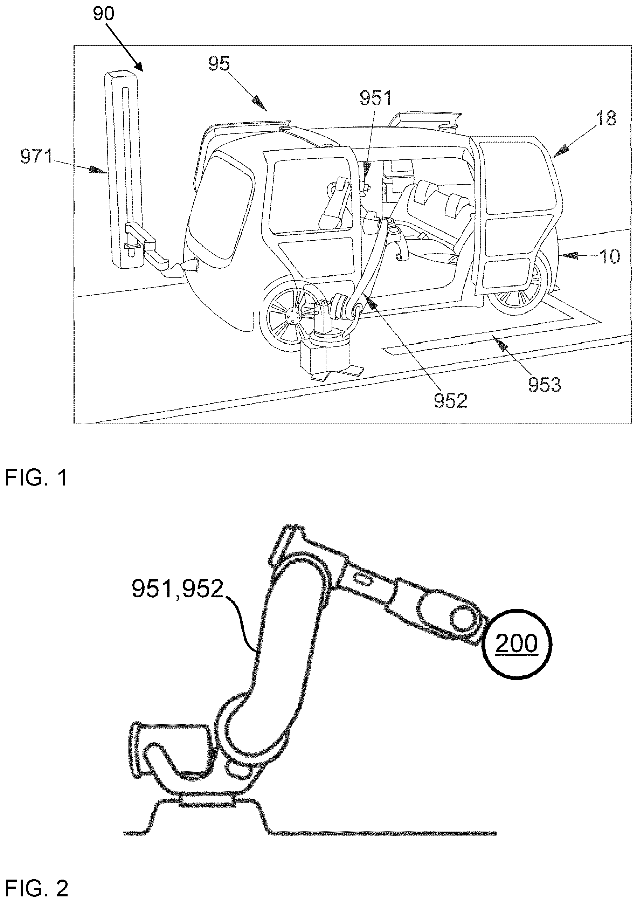

Figur 1 zeigt eine schematische Darstellung einer erfindungsgemäßen Servicestation, insbesondere eines ersten Servicemoduls 95 zur Identifizierung einer Fahrzeugverschmutzung zumindest einer Fahrzeugkomponente des Fahrzeugs 10. Um eine Identifizierung der Verschmutzung zumindest einer Fahrzeugkomponente an dem Fahrzeug 10 durchzuführen, fährt dieses in das Servicemodul 95 ein, um dort auf einer Halteposition 953 zum Stehen zu kommen. Sobald das Fahrzeug 10 auf der Halteposition 953 zum Stehen kommt, öffnen sich die Fahrzeugtüren 18 des Fahrzeugs 10 selbsttätig. Dies ist bevorzugt durch die Steuereinheit 92 des ersten Servicemoduls 95 veranlasst, die direkt mit der Steuereinheit 40 des Fahrzeugs 10 kommuniziert. Sobald die Fahrzeugtüren 18 geöffnet sind, werden ein erster Roboterarm 951 und ein zweiter Roboterarm 952 in das Fahrzeug 10 eingeführt. Alternativ kann das Servicemodul 95 einen mobilen Roboter aufweisen, der in Figur 1 nicht dargestellt ist.

Figur 2 zeigt eine schematische Darstellung eines solchen Roboterarms 951, 952 mit einem daran angeordneten Werkzeug 200 zur Identifizierung von Fahrzeugverschmutzungen. Der Roboterarm 951, 952 weist ferner mehrere Gelenke sowie mehrere mit den Gelenken verbundene Aktuatoren auf. Somit ist der Roboterarm 951, 952 dazu in der Lage, auch komplexe Geometrien anzunehmen. Insbesondere kann der Roboterarm 951, 952 durch ein geöffnetes Fahrzeugfenster oder eine geöffnete Fahrzeugtür in das Fahrzeuginnere eindringen und somit das Werkzeug an verschiedene Fahrzeugkomponenten annähern.

Darüber hinaus können an den Roboterarmen 951, 952 weitere Werkzeuge zum Durchführen einer Innenraumreinigung angeordnet sein, wie beispielsweise eine (nicht dargestellte) Staubsaugerdüse, ein Applikator zum Auftrag eines Reinigungsmittels und Mittel zur Polsterreinigung. Das in Figur 1 gezeigte erste Servicemodul 95 weist zudem einen Ladeanschluss 971 zum Auffüllen des elektrischen Energiespeichers 36 des Fahrzeugs 10 auf.

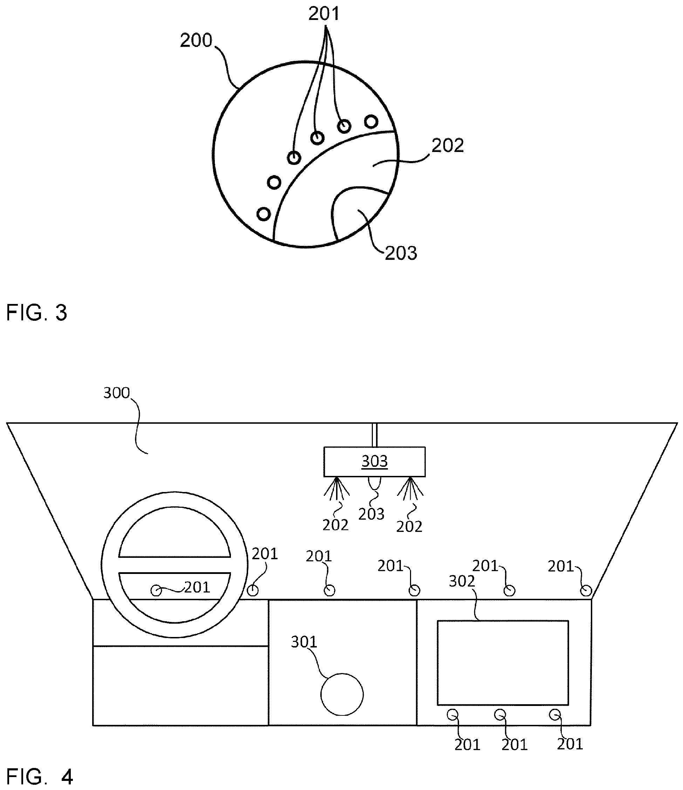

Figur 3 zeigt eine schematische Darstellung eines Werkzeugs 200 zum Identifizieren der Verschmutzung zumindest einer Fahrzeugkomponente. zumindest gemäß einer Ausführungsform. Gemäß dieser Ausführungsform ist das Werkzeug 200 im Wesentlichen kugelförmig ausgebildet und wie in Figur 2 schematisch dargestellt, dazu ausgebildet, an einem freien Ende eines Roboterarm 951, 952 befestigt zu werden. Bevorzugt ist die Befestigung des kugelförmigen Werkzeugs 200 an dem Roboterarm 951, 952 derart, dass das Werkzeug 200 mittels eines Kugelgelenks in beliebigen Richtungen dreh- beziehungsweise schwenkbar ausgebildet ist. Somit wird das Annähern an eine Vielzahl verschiedener Fahrzeugkomponenten erleichtert. Das Werkzeug 200 weist Mittel zum Identifizieren einer Verschmutzung zumindest einer Fahrzeugkomponente auf, insbesondere einen Dampfemitter 201, eine Lichtquelle 202 und einen optischen Sensor 203.

Bevorzugt ist das Werkzeug 200 dazu ausgebildet, zumindest eine Fahrzeugkomponente mit der Lichtquelle 202 mit Licht einer bestimmten Wellenlänge zu beleuchten und mit dem optischen Sensor 203 einen von der Fahrzeugkomponente reflektierten Anteil des Lichts zu erfassen. In Abhängigkeit des Wellenlängenbereichs und der räumlichen Auflösung in Bezug auf das detektierte Signal ist dieses dabei repräsentativ für eine lokale oder globale Verschmutzung der zumindest einen Fahrzeugkomponente. Beispielsweise kann mittels UV-Licht ein Bildsignal von Urinflecken aufgenommen werden und/oder kann mittels der Messung eines Reflektionsgrads von Licht auf eine Staubbedeckung einer Oberfläche geschlossen werden. Mit dem Dampfemitter 201 kann ferner Wasserdampf auf zumindest eine Oberfläche einer Fahrzeugkomponente abgegeben werden, um darauf befindliche Verschmutzungen, insbesondere fetthaltige Verschmutzungen, sichtbar zu machen. Die Dampfemitter 201 sind insbesondere entlang einer Fuge zwischen dem Schwingkörper und der restlichen Oberfläche des kugelförmigen Werkzeugs angeordnet und dazu ausgebildet, Dampf abzugeben.

Figur 4 zeigt eine schematische Darstellung eines Fahrzeuginnenraums, aufweisend eine Fahrzeugscheibe 300, insbesondere eine Windschutzscheibe 300, ein Bedienelement 301, insbesondere einen Drehregler 301, und ein Display 302, insbesondere ein Touchscreen 302. Die erfindungsgemäße Servicestation 90 übermittelt gemäß einer Ausführungsform eine erste Nachricht an ein Fahrzeug 10, welche das Fahrzeug 10 auffordert, eine Identifikation einer Verschmutzung zumindest einer Fahrzeugkomponente zu unterstützen. Hierfür sind in dem Fahrzeuginnenraum des in Figur 4 dargestellten Fahrzeugs 10 entlang eines unteren Randes der Windschutzscheibe 300 eine Mehrzahl von Dampfemittern 201, wie bereits vorstehend beschrieben, angeordnet. Weitere Dampfemitter 201 sind unterhalb des Displays 302 angeordnet. Durch Abgabe von Dampf mittels der Dampfemitter 201 können fetthaltige Verschmutzungen auf der Windschutzscheibe 300 beziehungsweise dem Display 302 besser sichtbar gemacht werden, so dass deren Erfassung mittels zumindest eines optischen Sensors 203 erleichtert wird. In Reaktion auf die erste Nachricht stellen alle Displays des Fahrzeugs 10 ferner einen weißen Hintergrund dar, um eine Beleuchtung zu verbessern und die Erkennbarkeit von Verschmutzungen zu fördern. Alternativ übermittelt die erfindungsgemäße Servicestation 90 gemäß einer Ausführungsform eine erste Nachricht an ein Fahrzeug 10, welche das Fahrzeug 10 auffordert, eine Identifikation einer Verschmutzung zumindest einer Fahrzeugkomponente durchzuführen. Hierzu weist das Fahrzeug 10 einen in einem Rückspiegel 303 angeordneten optischen Sensor 203 sowie mehrere in dem Rückspiegel angeordnete Leuchtquellen 202 auf. Die Leuchtquellen 202 geben Licht einer bestimmten Wellenlänge auf beispielsweise die Windschutzscheibe 300 ab und der optische Sensor 203 erfasst den reflektierten Anteil des Lichts zum Ermitteln eines Verschmutzungsgrades.

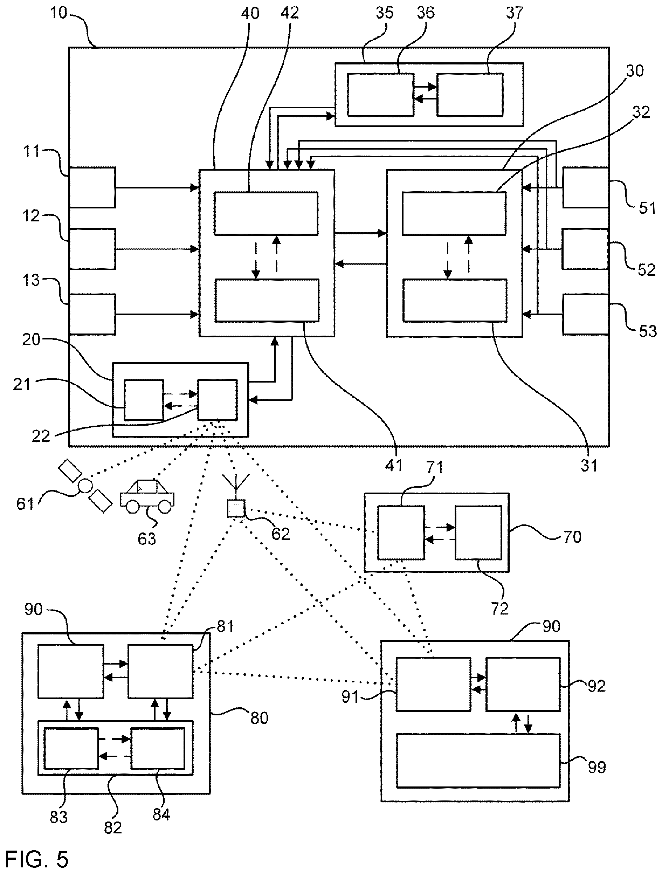

Figur 5 zeigt eine schematische Darstellung eines Systems zur Durchführung einer Serviceaktion an dem Kraftfahrzeug 10, insbesondere zur Identifikation einer Verschmutzung einer Fahrzeugkomponente. Das System weist ein autonomes Fahrzeug 10, einen Server 70, eine Servicestation 80 und ein Servicemodul 90, insbesondere wie mit Bezug zu den Figuren 1 bis 3 beschrieben, auf.

Figur 5 zeigt ein zweispuriges Fahrzeug 10 mit Elektromotor 37, das eine Vielzahl erster Sensoren, insbesondere einen ersten Sensor 11, einen zweiten Sensor 12, und einen dritten Sensor 13 aufweist. Die ersten Sensoren 11, 12, 13 sind zum Erfassen von Umgebungsdaten des Fahrzeugs 10 eingerichtet und umfassen beispielsweise Temperatursensoren zum Erfassen einer Umgebungstemperatur, eine Kamera zum Erfassen eines Bildes einer das Fahrzeug 10 unmittelbar umgebenden Umwelt, ein Mikrofon zum Erfassen von Geräuschen einer das Fahrzeug 10 unmittelbar umgebenden Umwelt, Abstandssensoren wie beispielsweise Ultraschallsensoren zum Erfassen von Abständen zu das Fahrzeug 10 umgebenden Objekten. Die ersten Sensoren 11, 12, 13 übertragen die von ihnen erfassten Umgebungssignale an eine erste Steuereinheit 40 des Fahrzeugs 10.

Das Fahrzeug 10 weist ferner eine Mehrzahl zweiter Sensoren, insbesondere einen vierten Sensor 51, einen fünften Sensor 52, und einen sechsten Sensor 53 auf. Bei den zweiten Sensoren 51, 52 ,53 handelt es sich um Sensoren zum Ermitteln von das Fahrzeug 10 selbst betreffenden Zustandsdaten, wie beispielsweise aktuelle Lage- und Bewegungsinformationen des Fahrzeugs 10. Bei den zweiten Sensoren 51, 52, 53 handelt es sich folglich beispielsweise um Geschwindigkeitssensoren, Beschleunigungssensoren, Neigungssensoren, Innenraumbewegungsmelder, Drucksensoren in den Fahrzeugsitzen oder dergleichen.

Darüber hinaus sind zumindest einige der zweiten Sensoren 51, 52, 53 zum Erfassen eines Verschmutzungsgrads des Fahrzeugs 10 ausgebildet. Die dafür ausgebildeten zweiten Sensoren 51, 52, 53 umfassen beispielsweise eine Innenraumkamera zum Erfassen von Bildsignalen des Fahrzeuginnenraums, eine Dashboard-Kamera zum Erfassen von Bildsignalen der Motorhaube, eine Kamera in einem Seitenspiegel zum Erfassen von Bildsignalen einer Seitentür des Fahrzeugs und anderweitige Sensoren zum Erfassen einer Verschmutzung, beispielsweise anhand eines Reflektiongrades des Fahrzeuglacks oder dergleichen. Die zweiten Sensoren 51, 52, 53 übermitteln die von ihnen erfassten Zustandssignale an die erste Steuereinheit 40 des Fahrzeugs 10. Darüber hinaus übermitteln zumindest einige der zweiten Sensoren 51, 52, 53 ihre Messergebnisse unmittelbar an ein Fahrsystem 30 des Fahrzeugs 10.

Das Fahrzeug 10 weist ferner ein erstes Kommunikationsmodul 20 mit einem Speicher 21 und einem oder mehreren Transpondern beziehungsweise Sendeempfängern 22 auf. Bei den Transpondern 22 handelt es sich um einen Funk-, WLAN-, GPS- oder Bluetooth-Sendeempfänger oder dergleichen. Ebenfalls bevorzugt ist der Transponder 22 zur Kommunikation via Mobilfunknetz, beispielsweise ein LTE, LTE-A oder 5G Mobilfunknetz ausgebildet. Der Transponder 22 kommuniziert mit dem internen Speicher 21 des ersten Kommunikationsmoduls 20, beispielsweise über einen geeigneten Datenbus. Mittels des Transponders 22 kann beispielsweise die aktuelle Position des Fahrzeugs 10 durch Kommunikation mit einem GPS Satelliten 61 ermittelt und diese im internen Speicher 21 gespeichert werden. Ebenso kann mittels des Transponders 22 eine im Speicher 21 abgelegte Berechtigungsinformation an ein externes Kommunikationsmodul übermittelt werden. Das erste Kommunikationsmodul 20 kommuniziert mit der ersten Steuereinheit 40.

Darüber hinaus ist das erste Kommunikationsmodul 20 dafür eingerichtet, mit einem Server 70, insbesondere einem vierten Kommunikationsmodul 71 des Servers 70, zu kommunizieren, beispielsweise über ein UMTS (Universal Mobile Telecommunication Service) oder LTE (Long Term Evolution) Mobilfunknetz. Das erste Kommunikationsmodul 20 ist ferner dazu eingerichtet, mit einem zweiten Kommunikationsmodul 81, einer Servicestation 80 und mit einem dritten Kommunikationsmodul 91 eines Servicemoduls 90 zu kommunizieren. Das erste Kommunikationsmodul 20 ist ferner dazu eingerichtet, mit einem (vierten) Kommunikationsmodul eines Reinigungsroboters 100 zu kommunizieren. Die Kommunikation erfolgt bevorzugt direkt über eine V2X Kommunikation oder über ein Mobilfunknetz. Die Kommunikation über das Mobilfunknetz erfolgt über ein oder mehrere Basisstationen 62.

Das Fahrzeug 10 weist ferner das Fahrsystem 30 auf, das zum vollständig autonomen Fahrbetrieb, insbesondere zur Längs- und Querführung, des Kraftfahrzeugs 10 eingerichtet ist. Das Fahrsystem 30 weist ein Navigationsmodul 32 auf, das zum Berechnen von Routen zwischen einem Start- und einem Zielpunkt und zum Ermitteln der entlang dieser Route vom Fahrzeug 10 durchzuführenden Manöver eingerichtet ist. Darüber hinaus umfasst das Fahrsystem 30 einen internen Speicher 31, beispielsweise für Kartenmaterialien, der mit dem Navigationsmodul 32 kommuniziert, beispielsweise über einen geeigneten Datenbus. Zumindest ein Teil der zweiten Sensoren 51, 52, 53, des Fahrzeugs 10 übermittelt seine Messergebnisse direkt an das Fahrsystem 30. Bei diesen unmittelbar an das Fahrsystem übermittelten Daten handelt es sich insbesondere um aktuelle Lage- und Bewegungsinformationen des Fahrzeugs 10. Diese werden bevorzugt von Geschwindigkeitssensoren, Beschleunigungssensoren, Neigungssensoren, etc. erfasst.

Das Fahrzeug 10 weist ferner ein elektrisches Fahrsystem 35 auf, das die zum elektrischen Antrieb des Fahrzeugs 10 notwendigen Funktionalitäten zur Verfügung stellt. Insbesondere weist das elektrische Fahrsystem 35 einen elektrischen Energiespeicher 36 auf, der einem Elektromotor 37 die zum Antrieb des Fahrzeugs 10 notwendige elektrische Energie zur Verfügung stellt. Das elektrische Fahrsystem 35 weist ferner eine nicht dargestellte Ladevorrichtung zum Aufladen des elektrischen Energiespeichers 36 auf. Bei dem Fahrzeug 10 kann es sich darüber hinaus um ein Hybridfahrzeug handeln, welches einen Wasserstofftank zum Versorgen eines im Fahrzeug 10 angeordneten Brennstoffzellensystems aufweist.

Das Fahrzeug 10 weist ferner eine erste Steuereinheit 40 auf, welche zum Durchführen von Verfahrensschritten des Fahrzeugs zum Durchführen einer Serviceaktion eingerichtet ist. Hierzu verfügt die erste Steuereinheit 40 über einen internen Speicher 41 und eine CPU 42, welche miteinander kommunizieren, beispielsweise über einen geeigneten Datenbus. Darüber hinaus steht die erste Steuereinheit 40 in Kommunikationsverbindung mit zumindest den ersten Sensoren 11, 12, 13, den zweiten Sensoren 51, 52, 53, dem ersten Kommunikationsmodul 20 und dem Fahrsystem 30, beispielsweise über eine oder mehrere jeweilige CAN-Verbindungen, eine oder mehrere jeweilige SPI-Verbindungen, oder andere geeignete Datenverbindungen.

Das System zum Durchführen des erfindungsgemäßen Verfahrens weist ferner bevorzugt einen Server 70 auf. Der Server 70 wird bevorzugt von einem Flottenbetreiber einer autonomen Fahrzeugflotte, beispielsweise im Rahmen eines Carsharing-Konzepts, von einem Serviceanbieter für Fahrzeugreinigungen und/oder von einem Fahrzeughersteller betrieben. Der Server 70 weist ein viertes Kommunikationsmodul 71 auf, das zur Kommunikation mit dem gleichen Protokoll wie das erste Kommunikationsmodul 20 des Fahrzeugs 10 eingerichtet ist. Der Server 70 weist ferner eine vierte Steuereinheit 72 auf. Das System zum Durchführen einer Serviceaktion weist ferner eine Servicestation 80 und zumindest ein Servicemodul 90 auf.

Die Servicestation 80 weist ein zweites Kommunikationsmodul 81 auf, das zur Kommunikation mit dem ersten Kommunikationsmodul 20 des Fahrzeugs 10, zur Kommunikation mit dem vierten Kommunikationsmodul 71 des Servers 70 und zur Kommunikation mit dem dritten Kommunikationsmodul 91 eines Servicemoduls 90 ausgebildet ist. Insbesondere ist das zweite Kommunikationsmodul 81 zur Kommunikation mit dem gleichen Protokoll wie das erste Kommunikationsmodul 20 des Fahrzeugs 10, wie das vierte Kommunikationsmodul 71 des Servers 70 und wie das dritte Kommunikationsmodul 91 des Servicemoduls 90 eingerichtet.

Darüber hinaus weist die Servicestation 80 eine Steuereinheit 82 auf, welche einen Speicher 83 und eine CPU 84 aufweist, die über einen geeigneten Datenbus, beispielsweise einen CAN-Bus oder SPI-Bus, miteinander kommunizieren. Die Servicestation 80 weist ferner zumindest ein Servicemodul 90, bevorzugt mehrere Servicemodule 90, auf. Die Komponenten des Servicemoduls 90 gleichen denen des im Folgenden erläuterten Servicemoduls 90. Die Servicestation 80 weist somit zumindest ein Servicemodul 90 auf und/oder ist mit zumindest einem eigenständigen Servicemodul 90 assoziiert.

Jedes der Servicemodule 90 ist zur Kommunikation mit der zweiten Steuereinheit 82 ausgebildet. Die zweite Steuereinheit 82 ist dazu ausgebildet, in Kommunikation mit dem zweiten Kommunikationsmodul 81 und dem zumindest einen Servicemodul 90 die von der Servicestation 80 durchgeführten Schritte des erfindungsgemäßen Verfahrens durchzuführen.

Die zweite Steuereinheit 82 ist insbesondere dazu ausgebildet, die Schritte der erfindungsgemäßen Servicestation 80 durchzuführen.

Das erfindungsgemäße System weist zumindest ein Servicemodul 90 auf. Das Servicemodul 90 weist ein drittes Kommunikationsmodul 91 auf, das zur Kommunikation mit dem ersten Kommunikationsmodul 20 des Fahrzeugs 10, zur Kommunikation mit dem vierten Kommunikationsmodul 71 des Servers 70 und zur Kommunikation mit dem zweiten Kommunikationsmodul 81 der Servicestation 80 ausgebildet ist. Insbesondere ist das dritte Kommunikationsmodul 91 zur Kommunikation mit dem gleichen Protokoll wie das erste Kommunikationsmodul 20 des Fahrzeugs 10, das vierte Kommunikationsmodul 71 des Servers 70 und das zweite Kommunikationsmodul 81 der Servicestation 80 eingerichtet.

Darüber hinaus weist das Servicemodul 90 eine dritte Steuereinheit 92 auf, welche beispielsweise einen Speicher und eine CPU aufweist, die über einen geeigneten Datenbus, beispielsweise einen CAN-Bus oder SPI-Bus, miteinander kommunizieren.

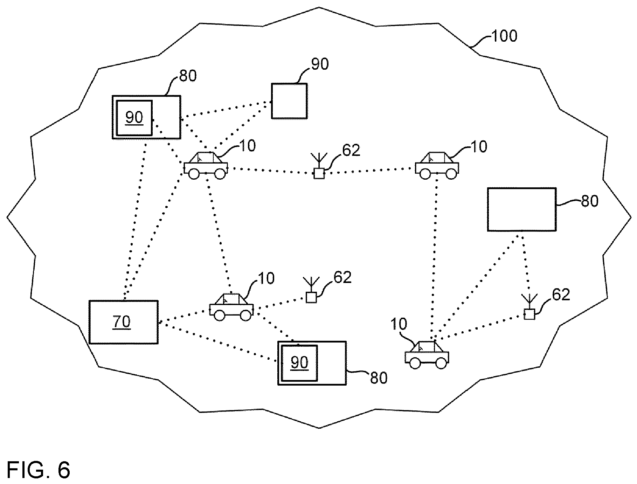

Figur 6 zeigt eine schematische Darstellung eines Betriebsbereichs 100 zur Durchführung der erfindungsgemäßen Verfahren unter Verwendung des in Figur 5 dargestellten Systems. Der Betriebsbereich 100 erstreckt sich bevorzugt über ein urbanes Ballungsgebiet, beispielsweise eine Stadt oder ein Stadtzentrum. Innerhalb des Betriebsbereichs 100 befindet sich eine Vielzahl autonomer Fahrzeuge 10, von denen jedes eine grundlegende Konfiguration, wie mit Bezug zu Figur 5 erläutert, aufweist. Jedes der autonomen Fahrzeuge 10 ist dabei von Nutzern eines Carsharing-Dienstes abrufbar oder aber einem bestimmten Nutzer dauerhaft zugeordnet.

Der Betriebsbereich 100 weist eine Vielzahl von Servicestationen 80 und Servicemodulen 90 auf. Ferner ist ein Server 70 im Betriebsbereich 100 angeordnet. Die autonomen Fahrzeuge 10 sind zur Kommunikation untereinander, insbesondere mittels der ersten Kommunikationsmodule 20 und via Basisstationen 62 eines Mobilfunknetzes, ausgebildet. Die Fahrzeuge 10 sind ferner zur Kommunikation mit den Servicestationen 80, den Servicemodulen 90 und dem Server 70 ausgebildet. Die Kommunikation erfolgt dabei direkt zwischen diesen Elementen oder über Basisstationen 62 eines Mobilfunknetzes. Darüber hinaus sind auch die anderen Komponenten des in der Figur 5 dargestellten Systems zur direkten oder indirekten Kommunikation miteinander ausgebildet, wie beispielsweise eine Servicestation 80 mit dem Server 70 und Servicemodulen 90 und der Server 70 mit den Servicemodulen 90. Verbindungen sind in Figur 6 mit den gestrichelten Linien angedeutet.

### Bezugszeichenliste

- 10: Kraftfahrzeug
- 11: erster Sensor
- 12: zweiter Sensor
- 13: dritter Sensor
- 18: Fahrzeugtür

- 20: erstes Kommunikationsmodul
- 21: Speicher
- 22: Transponder

- 30: Fahrsystem
- 31: Speicher
- 32: CPU
- 35: elektrisches Fahrsystem
- 36: elektrischer Energiespeicher
- 37: Elektromotor

- 40: erste Steuereinheit
- 41: Speicher
- 42: CPU

- 51: vierter Sensor
- 52: fünfter Sensor
- 53: sechster Sensor

- 61: GPS Satellit
- 62: Mobilfunkstation
- 63: anderes Fahrzeug

- 70: Server
- 71: viertes Kommunikationsmodul
- 72: vierte Steuereinheit
- 80: Servicestation
- 81: zweites Kommunikationsmodul
- 83: Speicher
- 84: CPU

- 90: Servicemodul
- 91: drittes Kommunikationsmodul
- 92: dritte Steuereinheit
- 99: Mittel zum Durchführen einer Serviceaktion
- 95: erstes Servicemodul

- 951: Reinigungsroboter
- 952: Reinigungsroboter
- 953: Halteposition

- 100: Betriebsbereich

- 200: Werkzeug zur Schmutzidentifizierung
- 201: Dampfemitter
- 202: Lichtquelle
- 203: optischer Sensor

- 300: Fahrzeugscheibe
- 301: Bedienelement
- 302: Display
- 303: Rückspiegel

## Patentansprüche

1. Servicestation (90) für die Fahrzeuge (10) einer autonomen Fahrzeugflotte, aufweisend zumindest ein zum Identifizieren einer Verschmutzung zumindest einer Fahrzeugkomponente (300, 301, 302, 303) des Fahrzeugs (10) ausgebildetes Servicemodul (95) mit zumindest einem mobilen Roboter und/oder einem Roboterarm (951, 952), wobei an dem mobilen Roboter und/oder dem Roboterarm (951, 952) ein Werkzeug (200) zum Identifizieren von Verschmutzungen angeordnet ist,
**dadurch gekennzeichnet, dass** das Werkzeug zumindest eine zum Emittieren von Licht verschiedener Wellenlängen ausgebildete Leuchtquelle (202) und einen zum Detektieren von Signalen in einem einstellbaren Wellenlängenbereichen ausgebildeten optischen Sensor (203) aufweist,
wobei der zumindest eine optische Sensor (203) zum Detektieren eines Reflektionsgrades von durch die Leuchtquelle (202) emittierten Lichts verschiedener Wellenlängen an zumindest einer Oberfläche einer Fahrzeugkomponente (300, 301, 302, 303) ausgebildet ist.

2. Servicestation (90) nach Anspruch 1, **dadurch gekennzeichnet, dass** die zumindest eine Lichtquelle (202) zum Emittieren von UV-Licht und/oder Schwarzlicht ausgebildet ist und der zumindest eine optische Sensor (203) zum Detektieren eines Reflektionsgrades des UV-Lichts und/der des Schwarzlichts an zumindest einer Oberfläche einer Fahrzeugkomponente (300, 301, 302, 303) ausgebildet ist.

3. Servicestation (90) nach einem der vorangehenden Ansprüche, **dadurch gekennzeichnet, dass** die Lichtquelle (202) zum Emittieren von Licht spezieller Wellenlängenbereiche zum Reinigen von Oberflächen ausgebildet ist.

4. Servicestation (90) nach einem der vorangehenden Ansprüche, **dadurch gekennzeichnet, dass** das Werkzeug (203) zumindest einen zum Sichtbarmachen von Verschmutzungen von Oberflächen und zum Reinigen von Oberflächen ausgebildeten Dampfemitter (201) aufweist.

5. Servicestation (90) nach einem der vorangehenden Ansprüche, **dadurch gekennzeichnet, dass** an dem mobilen Roboter und/oder Roboterarm (951, 952) ferner ein Reinigungswerkzeug zum Durchführen einer Innenraumreinigung zumindest einer Fahrzeugkomponente (300, 301, 302, 303) angeordnet ist, wobei das erste Reinigungswerkzeug zumindest eines von einer Staubsaugerdüse, eine Polsterbürste und/oder ein Applikator zum Auftrag von Reinigungsmittel aufweist.

6. Servicestation (90) nach einem der vorangehenden Ansprüche, ferner aufweisend ein
ein für die Kommunikation mit den Fahrzeugen (10) und/oder einem Server (70) eines Flottenbetreibers eingerichtetes Kommunikationsmodul (91),
eine zum Identifizieren einer Fahrzeugverschmutzung zumindest einer Fahrzeugkomponente (300, 301, 302, 303) des Fahrzeug (10), zur Steuerung des Roboterarms (951, 952) und/oder zur Steuerung des Werkzeugs (200) eingerichtete Steuereinheit (92),
**dadurch gekennzeichnet, dass** das Kommunikationsmodul (91) dazu ausgebildet ist, eine erste Nachricht zum Identifizieren einer Verschmutzung zumindest einer Fahrzeugkomponente an ein Fahrzeug zu übermitteln und bevorzugt eine zweite Nachricht mit Informationen zu einem Verschmutzungsgrad zumindest einer Fahrzeugkomponente zu empfangen.

7. Verfahren einer Servicestation (90) nach einem der Ansprüche 1 bis 6 zum Identifizieren der Verschmutzung zumindest einer Fahrzeugkomponente (300, 301, 302, 303), das Verfahren aufweisend die Schritte:
Einsetzen des mobilen Roboters in das Fahrzeug (10) und/oder Einfahren des Roboterarms (951, 962) in das Fahrzeug (10),
Emittieren von Licht verschiedener Wellenlängen mittels einer Leuchtquelle (202) auf zumindest eine Fahrzeugkomponente (300, 301, 302, 303) des Fahrzeugs (10), und
Erfassen eines Verschmutzungsgrads zumindest einer Fahrzeugkomponente (300, 301, 302, 303) des Fahrzeugs (10) mittels des zumindest eines optischen Sensors (203) des Werkzeugs (200) anhand einer frequenzaufgelösten Erfassung der Intensität des von der zumindest einen
Fahrzeugkomponente (300, 301, 302, 303) reflektierten Lichts.

8. Verfahren nach Anspruch 7, ferner aufweisend die Verfahrensschritte:
Ermitteln einer an dem Fahrzeug durchzuführenden Reinigung anhand des erfassten Verschmutzungsgrads der zumindest einen Fahrzeugkomponente, und
Durchführen der ermittelten Reinigung mittels eines Reinigungswerkzeugs zum Durchführen einer Innenraumreinigung der zumindest einen Fahrzeugkomponente.

9. Verfahren nach Anspruch 8, ferner aufweisend die Verfahrensschritte:
Erfassen eines Reinigungsgrads der zumindest einen Fahrzeugkomponente mittels zumindest eines optischen Sensors (203) des Werkzeugs (200),
Vergleich des erfassten Reinigungsgrads mit dem erfassten Verschmutzungsgrad oder mit einer zu der durchgeführten Reinigung vorbestimmten Zielvorgabe;
Ermitteln eines Effektivitätsmaßes der durchgeführten Reinigung anhand des Vergleichs;
Erneutes Durchführen der Reinigung mittels des Reinigungswerkzeugs zum Durchführen einer Innenraumreinigung oder Ausgabe einer Fehlermeldung, sofern das Effektivitätsmaß einen vorbestimmten Grenzwert unterschreitet.

## Claims

1. Service station (90) for the vehicles (10) of an autonomous vehicle fleet, comprising at least one service module (95) which is designed to identify dirt on at least one vehicle component (300, 301, 302, 303) of the vehicle (10) and has at least one mobile robot and/or one obot arm (951, 952), wherein a tool (200) for identifying dirt is arranged on the mobile robot and/or robot arm (951, 952), **characterized in that** the tool (200) has at least one light source (202) which is designed to emit light of different wavelengths and an optical sensor (203) which is designed to detect signals in an adjustable wavelength range, the at least one optical sensor (203) is designed to detect a degree of reflection of light of different wavelengths emitted by the light source (202) on at least one surface of a vehicle component (300, 301, 302, 303).

2. Service station (90) according to claim 1 **characterized in that** the at least one light source (202) is designed to emit UV light and/or black light and the at least one optical sensor (203) is designed to detect a degree of reflection of the UV light and/or the black light on at least one surface of a vehicle component (300, 301, 302, 303).

3. Service station (90) according to either of the preceding claims, **characterized in that** the light source (202) is designed to emit light of specific wavelength ranges for cleaning surfaces.

4. Service station (90) according to any of the preceding claims, **characterized in that** the tool (203) has at least one steam emitter (201) which is designed to make dirt on surfaces visible and to clean surfaces.

5. Service station (90) according to any of the preceding claims, **characterized in that** a cleaning tool for carrying out interior cleaning of at least one vehicle component (300, 301, 302, 303) is further arranged on the mobile robot and/or robot arm (951, 952), the first cleaning tool comprising at least one of a vacuum cleaner nozzle, an upholstery brush and/or an applicator for applying cleaning agent.

6. Service station (90) according to any of the preceding claims, further comprising a
communication module (91) which is set up for communication with the vehicles (10) and/or a server (70) of a fleet operator,
a control unit (92), which is set up for identifying vehicle dirt on at least one vehicle component (300, 301, 302, 303) of the vehicle (10), for controlling the robot arm (951, 952) and/or for controlling the tool (200),
**characterized in that** the communication module (91) is designed to transmit a first message for identifying dirt on at least one vehicle component to a vehicle and preferably to receive a second message containing information on a level of dirt on at least one vehicle component.

7. Method of a service station (90) according to any of claims 1 to 6 for identifying the dirt on at least one vehicle component (300, 301, 302, 303), the method comprising the steps of:
placing the mobile robot into the vehicle (10) and/or inserting the robot arm (951, 962) into the vehicle (10),
emitting light of different wavelengths by means of a light source (202) onto at least one vehicle component (300, 301, 302, 303) of the vehicle (10), and detecting a level of dirt on at least one vehicle component (300, 301, 302, 303) of the vehicle (10) by means of the at least one optical sensor (203) of the tool (200) on the basis of frequency-resolved detection of the intensity of the light reflected by the at least one vehicle component (300, 301, 302, 303).

8. Method according to claim 7, further comprising the method steps of:
determining cleaning to be carried out on the vehicle on the basis of the detected level of dirt on the at least one vehicle component, and
carrying out the determined cleaning by means of a cleaning tool for carrying out interior cleaning of the at least one vehicle component.

9. Method according to claim 8, further comprising the method steps of:
detecting a degree of cleaning of the at least one vehicle component by means of at least one optical sensor (203) of the tool (200),
comparing the detected degree of cleaning with the detected level of dirt or with a target specification predetermined for the cleaning carried out; determining an effectiveness measure of the cleaning carried out on the basis of the comparison;
carrying out the cleaning again by means of the cleaning tool for carrying out interior cleaning or issuing an error message if the effectiveness measure falls below a predetermined limit value.

## Revendications

1. Station d'entretien (90) pour les véhicules (10) d'une flotte de véhicules autonomes, présentant au moins un module de service (95) configuré pour identifier une salissure sur au moins un composant de véhicule (300, 301, 302, 303) du véhicule (10) et comportant au moins un robot mobile et/ou un bras robotisé (951, 952), sur lesquels robot mobile et/ou bras robotisé (951, 952) est disposé un outil (200) permettant d'identifier des salissures, **caractérisée en ce que** l'outil (200) présente au moins une source de lumière (202) configurée pour émettre de la lumière de différentes longueurs d'onde et un capteur optique (203) configuré pour détecter des signaux dans une plage de longueurs d'onde réglable, l'au moins un capteur optique (203) est configuré pour détecter un degré de réflexion de la lumière de différentes longueurs d'onde émise par la source de lumière (202) sur au moins une surface d'un composant de véhicule (300, 301, 302, 303).

2. Station d'entretien (90) selon la revendication 1 **caractérisée en ce que** l'au moins une source de lumière (202) est configurée pour émettre de la lumière UV et/ou de la lumière noire et l'au moins un capteur optique (203) est configuré pour détecter un degré de réflexion de la lumière UV et/ou de la lumière noire sur au moins une surface d'un composant de véhicule (300, 301, 302, 303).

3. Station d'entretien (90) selon l'une des revendications précédentes, **caractérisée en ce que** la source de lumière (202) est configurée pour émettre de la lumière de plages de longueurs d'onde spéciales pour le nettoyage de surfaces.

4. Station d'entretien (90) selon l'une des revendications précédentes, **caractérisée en ce que** l'outil (203) présente au moins un générateur de vapeur (201) conçu pour rendre visibles les salissures sur des surfaces et pour nettoyer les surfaces.

5. Station d'entretien (90) selon l'une des revendications précédentes, **caractérisée en ce que** sur le robot mobile et/ou le bras robotisé (951, 952) est en outre disposé un outil de nettoyage permettant de réaliser un nettoyage d'un habitacle d'au moins un composant de véhicule (300, 301, 302, 303), dans lequel le premier outil de nettoyage présente au moins l'un parmi un suceur d'aspirateur, une brosse pour rembourrage et/ou un applicateur permettant d'appliquer un produit de nettoyage.

6. Station d'entretien (90) selon l'une des revendications précédentes, présentant en outre
un module de communication (91) configuré pour communiquer avec les véhicules (10) et/ou un serveur (70) d'un gestionnaire de flotte,
une unité de commande (92) configurée pour identifier une salissure de véhicule sur au moins un composant de véhicule (300, 301, 302, 303) du véhicule (10), pour la commande du bras robotisé (951, 952) et/ou pour la commande de l'outil (200),
**caractérisée en ce que** le module de communication (91) est configuré pour transmettre à un véhicule un premier message pour identifier une salissure sur au moins un composant de véhicule et de préférence pour recevoir un second message comportant des informations concernant un degré de salissure d'au moins un composant de véhicule.

7. Procédé d'une station d'entretien (90) selon l'une des revendications 1 à 6 pour identifier la salissure sur au moins un composant de véhicule (300, 301, 302, 303), le procédé présentant les étapes consistant à :
insérer le robot mobile dans le véhicule (10) et/ou introduire le bras robotisé (951, 962) dans le véhicule (10),
émettre de la lumière de différentes longueurs d'onde au moyen d'une source de lumière (202) sur au moins un composant de véhicule (300, 301, 302, 303) du véhicule (10), et détecter un degré de salissure d'au moins un composant de véhicule (300, 301, 302, 303) du véhicule (10) au moyen de l'au moins un capteur optique (203) de l'outil (200) à l'aide d'une détection résolue en fréquence de l'intensité de la lumière réfléchie par l'au moins un composant de véhicule (300, 301, 302, 303).

8. Procédé selon la revendication 7, présentant en outre les étapes de procédé consistant à :
déterminer un nettoyage à réaliser sur le véhicule à l'aide du degré de salissure détecté de l'au moins un composant de véhicule, et
réaliser le nettoyage déterminé au moyen d'un outil de nettoyage pour réaliser un nettoyage d'habitacle de l'au moins un composant de véhicule.

9. Procédé selon la revendication 8, présentant en outre les étapes de procédé consistant à :
détecter un degré de nettoyage de l'au moins un composant de véhicule au moyen d'au moins un capteur optique (203) de l'outil (200),
comparer le degré de nettoyage détecté avec le degré de salissure détecté ou avec un objectif prédéfini pour le nettoyage réalisé ;
déterminer une mesure d'efficacité du nettoyage réalisé à l'aide de la comparaison ;
réaliser de nouveau le nettoyage au moyen de l'outil de nettoyage pour réaliser un nettoyage d'habitacle ou délivrer en sortie un message d'erreur dans la mesure où la mesure d'efficacité est inférieure à une valeur limite prédéfinie.
